(19) Europäisches Patentamt
European Patent Office
Office européen des brevets

(11) **EP 3 928 041 B1**

(12) **EUROPEAN PATENT SPECIFICATION**

(45) Date of publication and mention
of the grant of the patent:
**07.12.2022 Bulletin 2022/49**

(21) Application number: **20710276.5**

(22) Date of filing: **11.02.2020**

(51) International Patent Classification (IPC):
**F25B 49/02** (2006.01)        **F25D 29/00** (2006.01)

(52) Cooperative Patent Classification (CPC):
**F25B 49/022; G06N 3/0454; G06N 3/088;**
F25B 2500/19; F25B 2600/0251; F25B 2700/2104;
F25B 2700/2106; G06N 3/0481

(86) International application number:
**PCT/IB2020/051075**

(87) International publication number:
**WO 2020/170073 (27.08.2020 Gazette 2020/35)**

(54) **ADJUSTMENT METHOD AND ADJUSTMENT GROUP FOR A REFRIGERATION SYSTEM**

EINSTELLVERFAHREN UND EINSTELLGRUPPE FÜR EIN KÜHLSYSTEM

PROCÉDÉ DE RÉGLAGE ET GROUPE DE RÉGLAGE POUR UN SYSTÈME DE RÉFRIGÉRATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.02.2019 IT 201900002315**

(43) Date of publication of application:
**29.12.2021 Bulletin 2021/52**

(73) Proprietor: **Universitá Degli Studi Di Salerno
84084 Fisciano (SA) (IT)**

(72) Inventors:
• **MAIORINO, Angelo**
**84084 Fisciano (IT)**
• **APREA, Ciro**
**84084 Fisciano (IT)**

(74) Representative: **IP Sextant s.r.l.
Via A. Salandra, n.18
00187 Rome (IT)**

(56) References cited:
**CN-A- 104 296 493      DE-A1-102015 211 961
US-A- 5 231 848**

**Description**

The present invention relates to the field of refrigeration systems and, more particularly, to a method and a corresponding adjustment group for a refrigeration system through the use of a neural network.

It is known that in recent years, attention toward environmental and energy issues has grown exponentially and was shown in a number of actions put in the field in order to reduce the impression left by technologies developed by man, which have caused the rise of earth temperature and the reduction of the stratospheric ozone layer, as main consequence of the increase in greenhouse gas emissions [1].

The refrigeration industry is one of the fields that impact the most on these phenomena. It covers a wide variety of technologies to meet a wide variety of needs, such as the conservation of food and other perishable products in domestic, commercial and industrial cooling environments, the ambience cooling, both in stationary (buildings) and mobile (cars, trucks, etc.) applications, the preservation of pharmaceutical compounds or refrigeration in industrial processes and so on.

In November 2015 the International Institute of Refrigeration has estimated a total number of refrigeration, air conditioning systems and heat pumps, denominated for convenience below refrigeration system, equal to approximately 3 billion, 1.5 billion of which in applications for domestic use.

The main technology, used nowadays, for meeting the demand of refrigeration energy, is based on the vapour compression cycle of a working fluid (the refrigeration fluid ), through a series of thermodynamic transformations, allowing to obtain the desired useful refrigeration effect, to the detriment of an energy expenditure to be supplied in input.

In particular, a fluid compression refrigeration system of the traditional type is composed of four essential elements:

- one compressor, configured to provide to the refrigeration fluid the energy needed to implement one refrigeration cycle,
- one condenser, at which a transfer of thermal energy toward the outside environment occurs,
- one expansion element, wherein the lowering of fluid pressure occurs, and finally,
- one evaporator wherein the absorption of energy from the environment to be cooled occurs.

Among these, the compressor plays an essential role, because it is the element wherein the energy required to obtain the desired refrigeration effect is provided: i.e. wherein the mechanical energy, required to bring the working fluid from the evaporation pressure to that of condensation, is provided in the form of electrical energy.

Therefore, in order to obtain cold, in most cases, the use of a certain amount of electrical energy is required. In particular, the refrigeration industry covers approximately 17% of world consumption, 45% of which are in the domestic filed [2]

The refrigeration systems play, therefore, a very important role in the context of climate change, not only because of the consumption of required electric energy and greenhouse gas emissions in the atmosphere [3], but also because of direct emissions, linked to the dispersion of the working fluid into the environment.

Adverse effects are traditionally evaluated through some indexes (for example, GWP, TEWI, LCCP) that make it possible to quantify the impact of a refrigeration system on the environment, thus facilitating the selection process of refrigeration fluids having less impact on the environment and assessment of more efficient refrigeration systems [4].

In recent years, in fact, research was dedicated to the identification of technical solutions capable of making refrigeration systems more efficient: for example, a method for designing refrigeration systems based on TEWI calculation [5] was described, different types of plant in accordance with LCCP methodology [6] were evaluated, the possibility to replace synthetic fluids with natural ones [7] was evaluated, the performance of one of them [8], as well as the possibility of substitution with other fluids, both pure and mixtures [9], [10] were analysed. All these works have provided a considerable thrust toward systems with low environmental impact, some taking into account the whole life cycle of the plant [11], others only one phase thereof. Besides the research for new refrigerants, many efforts have been directed to the identification of techniques for improving the efficiency of refrigeration systems and, in particular, among them are several works relating to domestic applications. In this context, in fact, greater consumption of electric energy is linked precisely to refrigeration machines [12]. Documents US 5231848 A, CN 104296493 A and DE 10 2015 211961 A1 disclose conventional refrigeration systems.

Different can be the techniques used to reduce the demand for primary energy of a refrigeration machine, and these are discussed and analysed by various authors [13], [14];[15]. In [16], one model to identify the optimum life time that minimizes energy consumption, GWP and the cost of a domestic refrigerator in a given time period is used. The emphasis, in the latter case, is on the concept of optimization applied to refrigeration systems in relation to the useful life. This methodology has already been dealt with by other authors to find optimum project variables for industrial machinery [17]. Further efforts of the scientific community have been addressed, especially in the last decade, to search for new alternative technologies of vapour-compression refrigeration, i.e. the so-called Not--In--Kind Technologies [18], [19]. The main characteristic of the latter is the absence of the working fluid, in so far as they use a solid as cooling substance, and this is why we can also speak of solid state refrigeration.

Despite the advantages associated with the use of a refrigeration substance having negligible environmental impact and the absence of the compression element, causing higher energy consumption, NIK Technologies have still low performance with respect to vapour compression, in relation to the thermal jumps that can be reached in the current state of the art.

Returning to the adjustment of a refrigeration system of traditional type, based on the compression of a working fluid, it comprises a temperature adjustment within a chamber of the refrigeration system, for example by means of a suitable adjustment device such as a mechanical thermostat, according to a control logic of the on-off type. According to such adjustment method, the air temperature inside the chamber is allowed to oscillate within the limits of the refrigeration cycle, around a desired temperature ($T_{set}$). The period and amplitude of these oscillations strongly influence both preservation of products (for example, food) possibly stored in the chamber, and energy consumption. In fact, a high temperature can cause deterioration of the products stored therein, while frequent activation of the compressor can cause excessive energy consumption and a rapid degradation of mechanical components [20].

An alternative to this type of adjustment is provided by the use of electronic components dedicated to processing information from certain temperature sensors and aiming at the management of the system.

In this respect, systems controlled by PID logic or more advanced logic, such as Fuzzy logic, are now common on the market. With reference to the first, the aim is to control the activations-deactivations series (ON/OFF) of the compressor, by taking into account the real pattern of the temperature reached inside the chamber of the refrigeration system. However, that way of acting does not guarantee an optimization of energy consumption nor of useful life of the refrigeration system, but preserves only the value of the desired temperature inside the chamber. As regards the control systems based on Fuzzy logic, they allow a more evolved management of the refrigeration system, not only ensuring maintenance of desired temperature but also a certain reduction of energy consumption. However, this control logic provides for the use of compressors that are capable of operating at different number of revolutions, with consequent increase of plant costs. In addition, the logic used for energy saving is mainly referring to what happens in the chamber of the refrigeration system and does not take into account the variations of the external conditions which, as known from the literature concerning vapour-compression refrigeration systems, considerably influence the energy consumption of any refrigeration system.

There is therefore the need to improve the state of the art in the field of refrigeration systems and, more particularly, the main object of the present invention is to provide for a method of adjusting a refrigeration system, which is alternative with respect to traditional methods, allowing to improve the performance, both in terms of reduction of energy consumption, and in terms of reduction of maintenance interventions or however in terms of increase of the system useful life.

Another object of the present invention is to provide for a method of adjusting a refrigeration system which allows to reduce the environmental impact and management costs.

A further object of the present invention is to provide for an adjustment group for a refrigeration system that is easy to produce at competitive costs.

Yet another object of the present invention is to provide for an adjustment group for a refrigeration system that can be easily integrated into a refrigeration system of new generation and is also easily applicable to a refrigeration system of the traditional type.

A specific object of the present invention is an adjustment method for at least one refrigeration system, comprising at least one chamber whose temperature is to be adjusted, said at least one chamber being thermodynamically connected to at least one refrigeration circuit including at least one compressor, wherein said at least one refrigeration circuit comprises at least one fluid and is configured for subjecting said at least one fluid to at least one refrigeration cycle, so as to subtract heat energy from said at least one chamber for obtaining at least one desired temperature within a hysteresis band, said adjustment method comprising the following operational steps:

A. detecting at least one temperature value external to said refrigeration system, for example the temperature of the environment wherein the refrigeration system is located;
B. detecting at least one temperature value inside said chamber;

and being characterized in that it further comprises:

C. detecting at least one parameter associated to one energy optimization priority for said at least one refrigeration system;
D. determining, by using one main artificial neural network, at least one optimum offset value with respect to said desired temperature, as a function of said at least one value of said external temperature and said at least one value of said temperature inside said chamber, and said parameter associated to said energy optimization priority; and

E. controlling the activation-deactivation of said at least one compressor based on said at least an offset value thereby determined, and repeating steps A to D until the onset of one predefined stop condition.

According to another aspect of the invention, said step D may be subject to the determination of said main artificial neural network through of the following operational phases:

I. determining at least one mapping of the performance of said at least one refrigeration system to be adjusted, within its operating range, by means of a secondary artificial neural network;

II. minimizing, by using one constrained optimisation algorithm, one cost function defined on the basis of said at least one mapping thereby determined, and obtaining in output said at least one optimum offset value; and

III. training said main artificial neural network, based on said at least one optimum offset value thereby determined, said at least one temperature value external with respect to said refrigeration system, said at least one temperature value inside said chamber and said at least one parameter associated to said energy optimization priority thereby detected.

According to a further aspect of the invention said at least one secondary artificial neural network can be an artificial neural network of the feed-forward type, configured for outputting the duty cycle of said at least one compressor, the electric energy consumption (Eel,g) and the number of cycles per day of the same, based on said desired temperature, the temperature of the external environment and said hysteresis band.

According to an additional aspect of the invention said at least one secondary artificial neural network can comprise at least three layers, including one hidden layer, wherein the activation functions of the hidden layer are of the hyperbolic tangent type and those in the output layer are of the linear type.

According to another aspect of the invention, said at least one secondary artificial neural network can be trained off-line through the implementation of one mapping, resulting from a trial carried out by performing a plurality of laboratory tests conducted by setting different temperature values of the air of the external environment and the set-point that are consistent with the operating conditions of said at least one refrigeration system to be adjusted.

According to a further aspect of the invention, said cost function can be given by:

$$g = N_{c,g} * w_c * c_{cycle} + E_{el,g} * w_e * c_{ee}$$

and the constraints to which it is subjected are indicated by the following equations:

$$T_{set} + \Delta \leq T_{max,lim}$$
$$-T_{set} + \Delta \leq -T_{min,lim}$$
$$T_{set} = T_{desired}$$
$$T_{a,ext} = T_{measured}$$

wherein:

- $T_{max,lim}$ is the maximum allowable temperature inside said chamber and depends on the type of product stored therein;
- $T_{max,lim}$ is the minimum allowable temperature inside said chamber (101) and depends on said refrigeration system;
- $T_{desired}$ is a desired temperature within said chamber;
- $T_{measured}$ is the temperature measured externally to said refrigeration system and both $T_{desired}$ and $T_{measured}$ derive from said mapping determined in said step I;

from which the constrained optimisation problem is derived:

4

$$\min g = N_{c,g} * w_c * c_{cycle} + E_{el,g} * w_e * c_{ee}$$

$$-T_{set} + \Delta \leq -T_{min,lim}$$

$$T_{set} + \Delta \leq T_{max,lim}$$

$$T_{set} = T_{desired}$$

$$T_{a,ext} = T_{measured}$$

$$w_e = w_{e,desired}$$

$$w_c = 1 - w_e$$

$$c_{cycle} = c_{i,ref}/N_{c,ref}$$

$$c_{ee} = c_{e,u}$$

$$T_{a,ext,min} \leq T_{a,ext} \leq T_{a,ext,max}$$

$$T_{min,lim} \leq T_{set} \leq T_{max,lim}$$

$$\Delta_{min} \leq \Delta \leq \Delta_{max}$$

wherein, in addition:

- $C_{i,ref}$ is the market value of said refrigeration system;

- $N_{c,ref}$ is the number of expected working cycles;

- $C_{e,u}$ is the average cost of electric kWh for the country wherein said refrigeration system is located

- $w_e$ and $w_c$ are bound together through value $w_{e,measured}$, representing a value comprised between 0 and 1, whereby with values of $w_{e,measured}$ close to 0, one optimization logic is identified aiming at extending the useful life of said refrigeration system, while for values close to 1, one optimization logic is identified aiming at reducing energy consumption.

According to an additional aspect of the invention, said main artificial neural network can be an artificial neural network of the feed-forward type, comprising at least 3 layers, optionally three, one of which is hidden, and the activation functions used in the hidden layer are of the hyperbolic tangent type, while in the output layer they are of the linear type.

According to another aspect of the invention, said step E of controlling can comprise:

- determining at least one maximum temperature value $T_{turnon}$, and at least one minimum temperature value $T_{turnoff}$ based on said at least one optimum offset value $\Delta_{opt}$ determined at said step D, wherein:

$$T_{turnon} = T_{set} + \Delta_{opt}$$

$$T_{turnoff} = T_{set} - \Delta_{opt}$$

- comparing said at least one value of the temperature inside said chamber with said at least one maximum temperature value $T_{turnon}$ and said at least one minimum temperature value $T_{turnoff}$, and
- deactivating the said at least one compressor, if said internal temperature is less than said minimum temperature value $T_{turnoff}$ or activating said at least one compressor, if said internal temperature is greater than said maximum temperature value $T_{turnon}$.

A specific object of the present invention is an adjustment group for at least one refrigeration system, comprising at least one chamber whose temperature is to be adjusted, said at least one chamber being thermodynamically connected to at least one refrigeration circuit including at least one compressor, wherein said at least one refrigeration circuit comprises at least one fluid and is configured for subjecting said at least one fluid to at least one refrigeration cycle, so as to subtract heat energy from said at least one chamber for obtaining at least one desired temperature, said adjustment system comprising:

- at least one first sensor configured to detect at least one temperature value external with respect to said refrigeration system;
- at least one second sensor configured to detect at least one temperature value inside said chamber;

and being characterized in that it further comprises:

- at least one input/output device configured to detect the selection of at least one energy optimization function for said at least one refrigeration system;
- at least one processor, comprising at least one artificial neural network, operatively connected to said at least one first sensor, to said at least one second sensor and said at least one input/output device, and configured therewith for implementing said above mentioned adjustment method.

The present invention will be now described, for illustrative but not limiting purposes, according to its preferred embodiments, with particular reference to the Figures of the accompanying drawings, wherein:

Figure 1 graphically shows a traditional adjustment method for a refrigerating system;
Figure 2 shows a block diagram of the adjustment group according to the present invention, applied to a refrigeration system of traditional type;
Figure 3 is another schematic representation of a traditional refrigeration system with an adjustment group according to the present invention applied thereto;
Figure 4 shows a flow chart of the main steps of the adjustment method of the invention;
Figure 5 is a graphical representation of a model of an main artificial neural network to be used in the adjustment method of the present invention, in particular to define the provision of an optimum hysteresis of temperature inside a chamber of a refrigeration system to be adjusted;
Figure 5a illustrates one mapping of the optimum hysteresis of the refrigeration system, with the variation of some operation parameters;
Figure 6 is a graphical representation of a model of a secondary neural networks, to be used in the adjustment method of the present invention, in particular to define one energy consumption mapping of a refrigeration system to be adjusted;
Figure 6a shows the trend of the temperature inside one chamber of a refrigeration system to be adjusted and the activation-deactivation state of the corresponding compressor, during one step of the method of the present invention;
Figures 7 to 13 illustrate the results of some experimental tests performed on a traditional refrigeration system with and without the application of the adjustment group according to the invention.

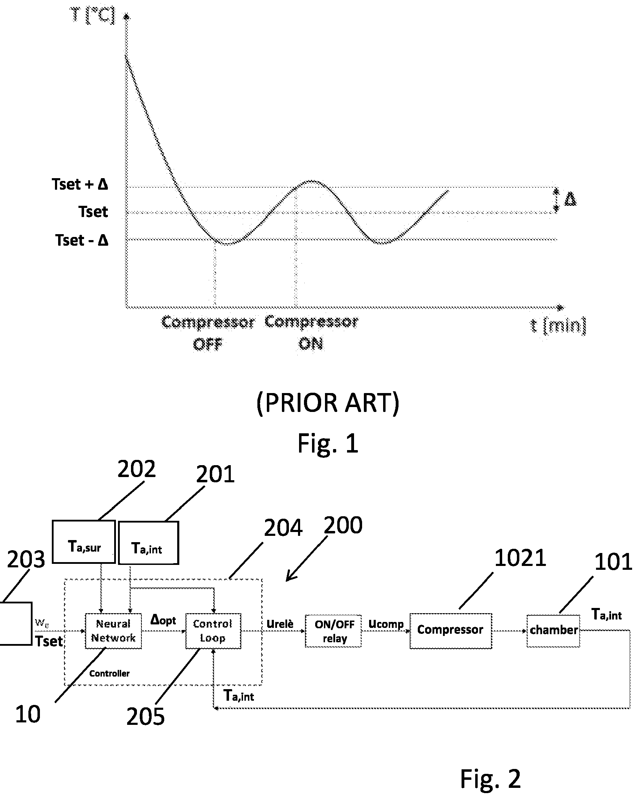

Enclosed Figure 1 graphically represents a traditional adjustment method for one fluid compression refrigeration system of the type briefly described above and therefore comprising a temperature adjustment within a chamber of the refrigeration system, for example a suitable adjustment device such as a mechanical thermostat, according to a control logic of the on-off type. Air temperature inside the chamber is allowed to oscillate within the limits of the refrigeration cycle, around a desired temperature ($T_{set}$). Said traditional adjustment method uses a so-called relay control with hysteresis, wherein limits of the cycle are defined, in terms of temperature, through one adjustment band (precisely referred to as hysteresis, $\Delta$), i.e. an offset value, with respect to the desired temperature ($T_{set}$, in Figure 1) of the chamber. The offset value $\Delta$ in the great majority of cases is constant during normal operation of the system. Such an adjustment method is not optimal both with reference to the accurate control of temperature inside the chamber of the system, and with reference to energy consumption.

On the contrary, the adjustment method of the present invention, as will be seen below, is inspired by the traditional adjustment method illustrated in Figure 1 but it advantageously departs therefrom, in that it allows to adjust in an "intelligent" way the temperature inside the measurement chamber, also as a function of the boundary conditions of the refrigeration system wherein it is implemented and, in particular, as a function of the temperature external to the same refrigeration system, for example the temperature of the environment wherein the refrigeration system is located, or and as a function of the user habits (intended as the frequency of events such as, for example, access to the chamber of the refrigeration system, loading and unloading of the products from the chamber, etc.), thus allowing an accurate control of the temperature in the chamber of the system and also of energy consumption.

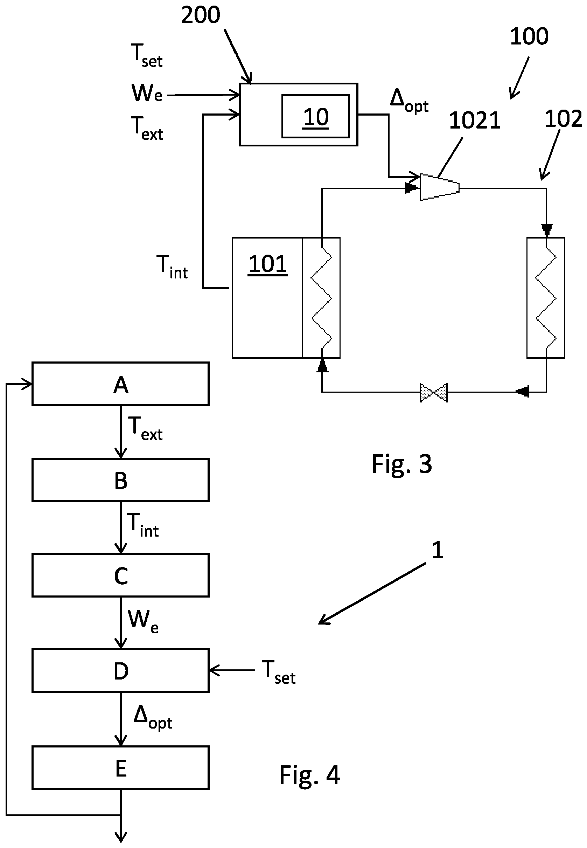

With particular reference to Figures 2 to 4, it will be noted that the adjustment method of the present invention is generally designated by reference numeral 1 and is applied to a refrigeration system 100, comprising at least one chamber 101 the temperature of which is to be adjusted, the chamber being thermodynamically connected to at least one refrigeration circuit 102 including at least one compressor 1021 for a corresponding refrigeration fluid (not shown in the drawings), which refrigeration circuit 102 is configured for subjecting such refrigeration fluid to at least one refrigeration cycle, in order to subtract thermal energy from chamber 101 for achieving a desired temperature ($T_{set}$).

Such a method comprises the following operational steps:

A. detecting at least one temperature value ($T_{ext}$) external with respect to the refrigeration system 100;

B. detecting at least one temperature value ($T_{int}$) inside chamber 101 of the refrigeration system 100;

C. detecting one parameter ($w_e$) associated to one energy optimization priority for the at least one refrigeration system 100;

D. determining at least one optimum offset value $\Delta_{opt}$, with respect to a desired temperature $T_{set}$, as a function of the at least one external temperature value $T_{ext}$ and of the at least one temperature value Tint inside chamber 101, and of detected parameter $w_e$, associated to the energy optimization priority; and

E. controlling the activation-deactivation of the compressor 1021, based on the optimum offset value ($\Delta_{opt}$) thereby determined, and repeating steps A to D until the onset of one predefined stop condition.

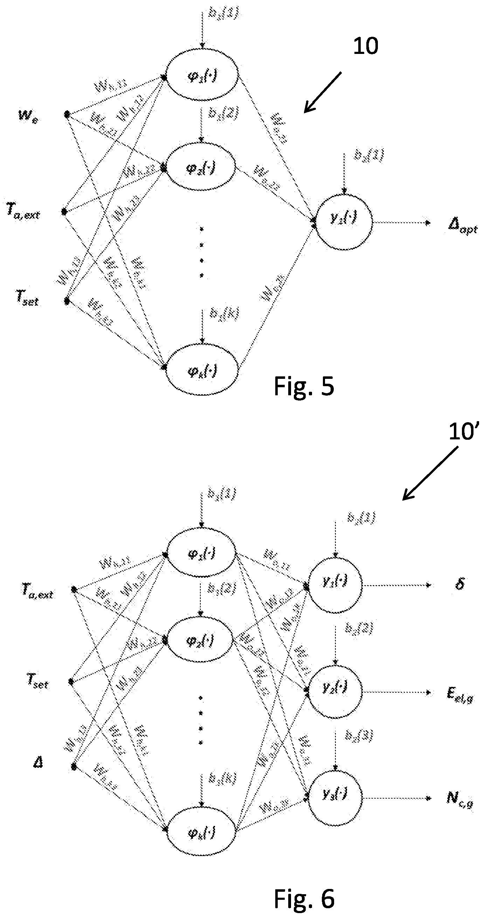

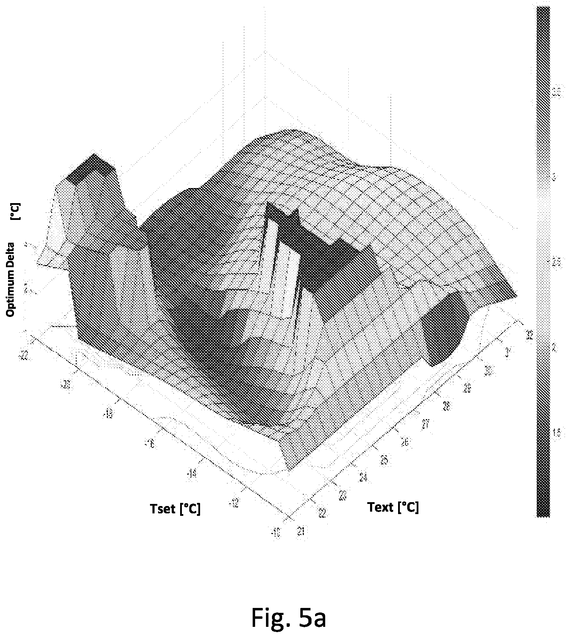

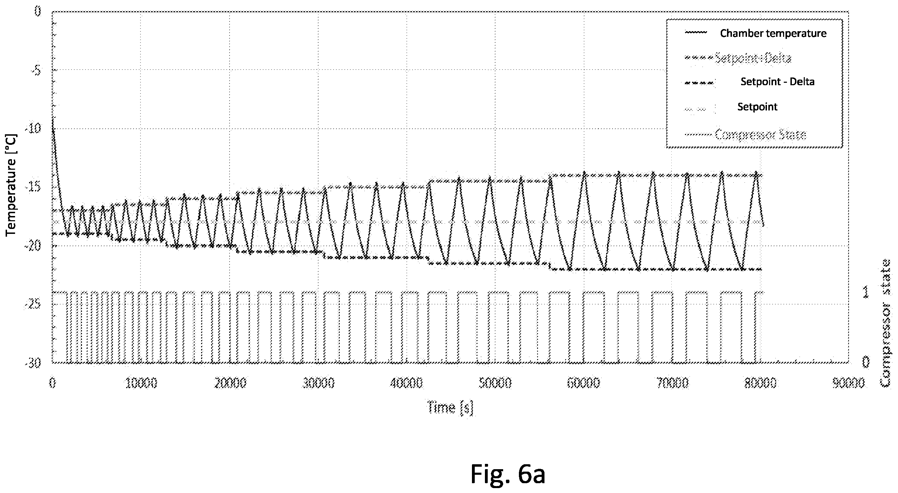

According to a particularly advantageous aspect of the invention, step D about determination of optimum offset $\Delta_{opt}$ comprises the use of a main artificial neural network 10 (see Figure 5) determined as will be described below, on the basis of a secondary artificial neural network, illustrated in Figure 6 and indicated through reference number 10'.

More particularly, the determination of the main artificial neural network 10 is carried out through the following operational steps, which may be executed optionally once, for each refrigeration system 100 to be adjusted, according to the method of the invention, and that require:

I. determining at least one mapping of the performance of the refrigeration system 100 to be adjusted, within its operating range, through the secondary artificial neural network 10';

II. minimizing, by using one constrained optimisation algorithm, one cost function (g) defined on the basis of said at least one mapping thereby determined, and providing in output said at least one optimum offset value ($\Delta_{opt}$); and

III. training the main artificial neural network 10, based on the optimum offset value $\Delta_{opt}$ thus determined and the temperature value $T_{ext}$ external to the refrigeration system, the value of the temperature $T_{int}$ of the chamber and the energy optimization priority defined by the detected parameter $w_e$.

As will be seen hereinafter, once the main artificial neural network 10 is defined, it may be implemented in a processor of an adjustment group implementing the method of the present invention, which will be applied to a refrigeration system 100 for adjusting the temperature inside its chamber 101.

It should also be noted that, according to one variant of the invention, the determination of the main artificial neural network 10 can occur for example at predefined regular time intervals or at a predetermined trigger event, for example whenever the refrigeration system 100 is put into operation after one shutdown period.

As regards the step of determination of the mapping of the performance of the refrigeration system 100 to be adjusted, this, as said, is done by means of a secondary artificial neural network 10', see Figure 6, which is an artificial neural network of the feed-forward type, configured to provide the duty cycle ($\delta$) of compressor 1021, electrical energy consumption ($E_{el,g}$) and the number of cycles ($N_{c,g}$) per day of the same, according to the predefined desired temperature or set-point ($T_{set}$) for chamber 101 of the refrigeration system 100, at the temperature of the external environment ($T_{,ext}$) and at the hysteresis band ($\Delta$).

Such a secondary artificial neural network 10' can comprise at least three layers, in the illustrated case only three, one of them being hidden, wherein the activation functions of the hidden layer are of the hyperbolic tangent type, while in the output layer they are of the linear type.

That secondary artificial neural network 10' is in turn trained off-line through the implementation of one mapping, resulting from a trial carried out by performing a plurality of laboratory tests conducted by setting different temperature values of the air of the external environment $T_{a,ext}$ and the set-point $T_{set}$, which are consistent with the operating conditions of the refrigeration system 100 to be adjusted.

For each combination of these two variables ($T_{,ext}$; $T_{set}$) the response of the refrigeration system is detected and analysed, based on the amplitude of the hysteresis band ($\Delta$) that is increased/decreased in steps, optionally of about 0.5 °C each, up to the maximum value of the hysteresis band or offset $\Delta$ allowed by the refrigeration system 100 to be adjusted.

The laboratory tests are carried out in conditions of zero thermal load inside the chamber 101 and last for approximately 24 hours each and, from the analysis of the experimental data and the detected behaviour of the refrigeration system 100 at different working conditions, by direct or indirect measurement, the consumption of electric energy ($E_{el,g}$), the duty cycle ($\delta$) and the number of daily work cycles of the compressor ($N_{c,g}$) are obtained, this last datum is obtained by the following equation:

$$N_{c,g} = \frac{24 * 3600}{t_{on,ave} + t_{off,ave}} \qquad (1)$$

where $t_{on,ave}$ and $t_{off,ave}$ respectively represent the average of turn on and off time (expressed in seconds) in each cycle.

By the number of the compressor daily cycles, the turn on frequency of the compressor ($F_{c,g}$) is defined as:

$$f_{c,g} = \frac{N_{c,g}}{24 * 3600} \qquad (2)$$

One example of the training step of a real refrigeration system 100 is shown in Figure 6a, wherein the pattern of the temperature in the chamber of the refrigeration system to be adjusted is shown, with hysteresis band variable with $T_{A,ext}$= 25°C and $T_{set}$= -18°C.

As can be seen from Figure 6a, the red and blue dashed lines represent the temperatures at which the compressor is turned on and off, respectively, and the yellow dashed line represents the value of the set internal air temperature ($T_{set}$ or set-point).

The experimental mapping allows, therefore, to advantageously constitute matrices of input and output, each composed of 3 rows, representing the inputs ($T_{,ext}$; $T_{set}$; $\Delta$) and outputs ($\delta$; and$_{el,g}$; $N_{C,g}$) respectively, and with as many columns as the detected samples ($N_{sample}$), i.e.:

$$i \in (1, N_{sample}),$$

$$\overline{input_i} = \left[T_{a,ext,i}, T_{set,i}, \Delta_i\right] \qquad (3)$$

$$\overline{output_i} = y(\overline{input_i}) = [\delta_i, E_{el,i}, N_{c,i}]$$

Equation 3 represents the process of administering to the secondary artificial neural network 10' each vector of inputs from, which the calculation of the corresponding output vector is derived, wherein "i" represents the i-th sample of the experimental data while "Y" is the function of the secondary artificial neural network 10'.

Optionally, the secondary artificial neural network 10' is not trained with all samples of data available, indeed the so-called training set (training set) comprises only a part thereof, while the remaining data are used to validate the network, with the early stopping method, and/or to test it. In particular, it is optionally possible to divide the set of original data according to the following percentages: 60% in the training set, 30% in the validation set and 10% in the test set.

The definition of the number of neurons in the hidden layer of the secondary artificial neural network 10' is obtained, then, by minimization of the Mean Absolute Error Percentage (MAPE) [21]. In particular, MAPE was used as an index of comparison between various configurations of tested alternative neural networks, by calculating it by subjecting each model to the entire set of data available.

The secondary artificial neural network 10' allows to obtain, therefore, one mapping of the operation of the refrigeration system 100 to be adjusted, within its presumable working interval. More particularly, it is possible to define a function of the type:

$$\bar{Y} = [Y_1, Y_2, Y_3] = f(\bar{x}) = f(T_{a,ext}, T_{set}, \Delta)$$

where $Y_1$, $Y_2$ and $Y_3$ are, respectively, the duty cycle ($\delta$) of compressor 1021, electrical energy consumption ($E_{el,g}$) and the number of daily cycles ($N_{c,g}$), as well as a function g in order to identify the optimum value of the operational variable $\Delta$ (hysteresis band):

$$g(g_1, g_2) = g(c_{cycles}, c_{E_{el}})$$

$$in: \qquad (4)$$

*wherein:*

$$C_{cycles}(N_{c,g}, W_c, C_i)$$

$$C_{Eel}(E_{el,g}, W_e, C_{ee})$$

Function g is used as an input function for a constrained optimization process. In particular, the objective imposed is to reduce the absorption of electrical energy ($Y_2$) and, simultaneously, to maximize the useful life of the components ($Y_3$).

For this purpose a cost function is used, that takes into account the economic impact of these two variables and the possibility of being able to opt, depending on the needs, for a purely energetic optimization logic, one fully focused on the useful life of the refrigeration system 100 to be adjusted, or based on a compromise between the two.

With reference to equation 4, then, the variables:

- $w_C$ and $w_e$ are respectively parameters associated with weights assigned to each of the two quantities $N_{C,G}$ and $E_{EL,g}$ that allow to change the optimization priority;
- $c_i$ and $c_{ee}$ respectively represent, instead, the equipment cost of the refrigeration system 100, to be divided between the number of working cycles of the same, and the unit cost of the electric energy;
- $N_{C,G}$ and $E_{EL,g}$ are the number of ON/OFF cycles of the compressor 1021 and the daily electric energy consumption of the machine, which are provided as output by the artificial neural network 10'.

A method of weighted sum [22] is used to transform the multi-objective problem in a single-objective problem, obtaining the following expression for the cost function g:

$$g = N_{c,g} * w_c * c_{cycle} + E_{el,g} * w_e * c_{ee} \qquad (5)$$

and the constraints to which equation 5 is subjected are indicated by the following equations:

$$
\begin{aligned}
T_{set} + \Delta &\leq T_{max,lim} &&\text{(a}\\
-T_{set} + \Delta &\leq -T_{min,lim} &&\text{(b}\\
T_{set} &= T_{desired} &&\text{(c}\\
T_{a,ext} &= T_{measured} &&\text{(d}
\end{aligned}
\qquad (6)
$$

wherein:

- $T_{max,lim}$ is the maximum allowable temperature inside the chamber 101 and depends on the type of product stored therein;
- $T_{max,lim}$ is the allowable minimum temperature inside the chamber 101 and depends on the refrigeration system 100;
- $T_{desired}$ is a desired temperature set by the user; and
- $T_{measured}$ is the measured temperature outside of the refrigeration system 100.

Both $T_{desired}$ and $T_{measured}$, in the optimization process, does not refer to really measured values but come from the interrogation of the domain of the secondary artificial neural network 10'.

Costs values are then set. In particular, the equipment cost for the number of cycles ($c_i$) is defined by knowing the market value of the refrigeration system (100) ($c_{i,ref}$) and dividing by the number of expected work cycles ($N_{c,ref}$), while energy costs per unit ($C_{and}$) are defined on the basis of the average cost of electric kWh for the reference country ($c_{e,u}$). Weights $w_e$ and $w_c$ are bound together by value $w_{e,measured}$, that in the optimization process represents a value between 0 and 1. In particular, with values of $w_{e,measured}$ close to 0, an optimization logic is identified aiming at the lengthening of the useful life of the compressor, while for values close to 1, an optimization logic is identified aiming at the reduction of energy consumption.

The following problem of constrained optimisation is thereby obtained:

$$\min g = N_{c,g} * w_c * c_{cycle} + E_{el,g} * w_e * c_{ee} \qquad (7)$$

$$-T_{set} + \Delta \leq -T_{min,lim}$$

$$T_{set} + \Delta \leq T_{max,lim}$$

$$T_{set} = T_{desired}$$

$$T_{a,ext} = T_{measured}$$

$$w_e = w_{e,desired}$$

$$w_c = 1 - w_e$$

$$c_{cycle} = c_{i,ref}/N_{c,ref}$$

$$c_{ee} = c_{e,u}$$

$$T_{a,ext,min} \leq T_{a,ext} \leq T_{a,ext,max}$$

$$T_{min,lim} \leq T_{set} \leq T_{max,lim}$$

$$\Delta_{min} \leq \Delta \leq \Delta_{max}$$

the solution of which is identified for each point of operation in the domain of interest of the refrigeration system 100 to be adjusted, by using algorithm Interior Point [23].

In particular, N samples of data are obtained by imposing the tested conditions during the first experimental tests, in terms of $T_{set}$ and $T_{A,ext}$, and by varying the weight attributed to energy consumption $w_e$. An optimum solution in terms of adjustment band corresponds to each one of these configurations. The output of this process is, therefore, a mapping of the optimal hysteresis ($\Delta_{opt}$), see in particular Figure 5a, as a function of the set-point temperature and the external one, once the logic type that one wants to apply is set, by defining $w_e$ (in the case illustrated $w_e$=0.5 is set).

$\Delta_{opt}$ mapping, obtained with the optimization process, provides for a series of samples that can be used to train, optionally off-line, the main artificial neural network 10, as mentioned above with reference to the step III of the determination method above.

In this regard, it should be noted that the training of the main artificial neural network 10 may also occur in line. It is however required, in this case, to detect at predetermined intervals or continuously the power and/or the electric energy entirely absorbed by the refrigeration system 100, advantageously by means of a voltage and/or current sensor placed immediately upstream of the compressor 1021 and operatively connected to processor 204. The energy absorbed by the refrigeration system 100 thereby detected will be used as a parameter for the definition of a new mapping of $\Delta_{opt}$, according to the modes described above.

The main artificial neural network 10 is an artificial neural network of the feed-forward type capable of providing the optimum hysteresis band or offset $\Delta_{opt}$, wherein the inputs are represented by the operating variables of the system, i.e. the set-point temperature ($T_{set}$), by the temperature of the external environment ($T_{ext}$) and by the priority level of the energy optimization ($w_e$).

Neural network 10 comprises at least three layers, in the illustrated case three, one of them being hidden, and the activation functions used of the hidden layer are of the hyperbolic tangent type, while in the output layer they are of the linear type.

The number of samples for training and the number of hidden neurons are defined in a manner entirely similar to the neural network 10' described above, to which reference should be made. Once the architecture of the main artificial neural network 10 is determined, the optimum hysteresis $\Delta_{opt}$ is determined by the following mathematical formula:

$$\Delta_{opt} = \varphi_O \left( \sum_{k=1}^{H} w_{ok} * \varphi_H \left( \sum_{i=1}^{N} w_{ki} * x_i + b_k \right) + b_o \right) \qquad (8)$$

wherein

$x_i$ with $i$=1, 2, ..., N, is the vector of the network inputs, where N is the number of inputs;
$w_{ki}$, with $k$=1, 2, ...., H, is the matrix of weights hidden with H that is the number of neurons in the hidden layer;
$w_{ok}$, is the matrix of output weights;

$\varphi_H$ and $\varphi_O$, are the activation functions of the hidden layer and that of the output, with the respective bias vectors $b_k$ and $b_o$.

The input vector $x_i$ is stored at each detection of temperatures (Steps A and B) and for each determination of the function of energy optimization (step C) or whenever the value of the desired temperature $T_{set}$ is changed.

As already mentioned above, the main artificial neural network 10 provides for in output the optimum value of the operational variable $\Delta_{opt}$, in response also to the value assigned to the energy optimization function that can be selected by a user, depending on the type of optimization that one wants to obtain for its own refrigeration system, which comprises one function between the functions selected from a set comprising: one optimization function of the consumption of electric current associated to the refrigeration system, one optimization function of maintenance interventions; an intermediate optimization function of energy consumption and maintenance interventions.

Turning back to the adjustment method 1 for a refrigeration system 100 according to the present invention, it is quite evident that, steps A, B and C may be performed both continuously or at steps, for example at prefixed time intervals, and the determining step may be performed on one single set of detected values ($T_{ext}$, Tint, $w_e$) at a given instant in time or, for example, on average values of those parameters calculated from a predetermined number of earlier performed measurements.

According to a particularly advantageous aspect of the invention, step E about checking the activation-deactivation of compressor 1021 comprises:

- determining at least one maximum temperature value $T_{turnon}$, and at least one minimum temperature value $T_{turnoff}$ based on the at least one optimum offset value $\Delta_{opt}$, whereby:

$$T_{turnon} = T_{set} + \Delta_{opt}$$
$$T_{turnoff} = T_{set} - \Delta_{opt}$$

(9)

- comparing the at least one value of the temperature inside the chamber (Tint) with the at least one maximum temperature value $T_{turnon}$ and the at least one minimum temperature value $T_{turnoff}$, and
- deactivating the compressor 1021, if said internal temperature $T_{int}$ is less than the minimum temperature value $T_{turnoff}$ or activating the compressor 1021, if said internal temperature Tint is greater than the maximum temperature value $T_{turnon}$.

The desired temperature $T_{set}$, inside the chamber of the refrigeration system, can be selected by a user together with a parameter $w_e$ associated to one energy optimization priority, by means of suitable input-output devices of an adjustment group 200 configured to implement the method of the present invention, whereby the neural network 10 can determine one optimum offset value $\Delta_{opt}$ through which controlling the activation-deactivation of compressor 1021. The method is carried out for an indefinite period of time, until the onset of a stopping condition which can be, for example, sending one control signal to the adjustment group, optionally one shutdown command, or the attainment of a certain time limit from the starting instant of the implementation of the method.

As will be appreciated, the method of the present invention therefore provides for determining one optimum offset value $\Delta_{opt}$ that does not remain constant during the operation of the refrigeration system, but varies depending on the boundary conditions of the refrigeration system itself.

At each working cycle of the machine, therefore, as a reaction to the changed boundary or operative conditions, the hysteresis or the optimum offset $\Delta_{opt}$ is updated.

The method of the present invention is advantageously implemented by an adjustment group 200, that can be integrated into a refrigeration system of new generation and applied to an old generation or traditional refrigeration system 100, which refrigeration system 100 comprises, as already said above, at least one chamber 101 the temperature thereof is to be adjusted, the chamber 101 being thermodynamically connected to at least one refrigeration circuit 102 including at least one compressor 1021 of at least one refrigerant fluid, the compressor being configured for subjecting said refrigeration fluid to at least one refrigeration cycle, in order to subtract heat energy from the chamber 101, for the obtainment of at least one desired temperature $T_{set}$. The adjustment group 200 according to the present invention comprises:

- at least one first sensor 201 configured to detect at least one temperature value ($T_{ext}$) external with respect to said refrigeration system 100;
- at least one second sensor 202, configured to detect at least one temperature value (Tint) inside the chamber;
- at least one input/output device 203, configured for detecting at least one parameter ($w_e$) associated to one energy optimization priority for the refrigeration system (100);

- at least one processor 204, comprising at least one artificial neural network 10, operatively connected to said at least one first sensor 201, to said at least one second sensor 202 and said at least one input/output device 203, and configured therewith for implementing the adjustment method as described above.

As regards the input/output device 203, it should be noted that the method of the present invention makes it possible to leave the choice to a user to manually enter parameter $w_e$, associated with one energy optimization priority (for example, between: energy saving, longlife system, and intermediate between the first two), precisely by the input/output device 203, or to automatically detect the value $w_{e,measured}$.

Optionally, the adjustment assembly of the present invention comprises at least one control device 205 of the activation-deactivation components of compressor 1021, for example one control device operatively connected to or into the processor 204 and capable of transmitting control signals to the mechanical thermostat or ignition relay connected, in traditional systems, upstream of the compressor 102 of the refrigeration system.

The adjustment group described above can advantageously be included into one upgrade kit of an old generation refrigeration system and is also advantageously applicable, mutatis mutandis, also to other refrigeration systems of the absorption type, transcritical machines, to Peltier cells systems, magnetic coolers, electrocaloric refrigerators, elastocaloric refrigerators, refrigerating systems for refrigerated transport, any refrigeration system equipped with inertial accumulation, and the like.

The adjustment method and the corresponding adjustment group described above fulfils the objectives in the introduction.

In fact, they allow to obtain an energy saving and an extension of the useful life of a refrigeration system compared to traditional refrigeration systems.

Thanks to the use of the main artificial neural network 10 it is possible to reduce to a minimum the cycles of activation-deactivation of the compressor, whereby integrity of the components of the refrigeration system, for a longer time than conventional systems, is preserved. Not only that, the off-line training of the neural network does not commit considerable resources and the control implementation can be realized, for example, by means of programmable microcontrollers of middle-low economic range, two temperature sensors and one relay, whereby the costs of the adjustment group are reduced.

Finally, it is possible to easily apply the adjustment group 200 of the present invention to any refrigerating machine, without limits as regards the involved power, the reached temperatures and the adopted cold technologies. The simple configuration of the adjustment group 200 also allows not to make changes nor to the refrigeration circuit 102, nor to the chamber 101 of the old generation refrigeration system wherein it can be incorporated.

Experimental laboratory tests confirm the effectiveness of the adjustment method and adjustment group described above. The adjustment method according to the present invention was applied to a single block cabinet freezer intended for conservation of diagnostic drugs, biological material, serums and vaccines but also configured to be used, in general, for conservation of industrial products in the temperature range between -15°C and -32°C. Such a refrigeration system included one chamber 101 having storage volume equal to about 520 l and using R600a (isobutane) as refrigeration fluid.

In the specific case, the refrigeration circuit was composed of one 180 W reciprocating hermetic compressor having fixed speed, an air condenser with heat exchanger positioned on the outer rear wall, one dehydrating filter, one capillary tube wrapped on the suction pipe of the compressor and one evaporator coil mounted under each inner shelf of the freezer.

The temperature adjustment of room 101 was provided, according to the traditional refrigeration method, by means of a mechanical thermostat according to one on-off control logic with fixed hysteresis band $\Delta$, equal to about $\pm 1°C$.

One adjustment group as described above, thus comprising one processor 204, operatively connected to the neural network 10 of the type described above, the first 201 and second temperature sensor 202, as well as the input/output device 203 (in this specific case one pad of any suitable type), and the control device 205 for the activation-deactivation components of the compressor, was applied to such a system, and the effectiveness of the adjustment method was verified by two distinct experimental campaigns i.e.:

(a) one test in accordance with the UNI-ISO15502 norm, and
(b) one test where a load is present and opening of the door of chamber 101 occurs.

In both cases three operation logics were investigated and namely: energy optimization ($w_e$=1), optimization of the useful life of plant ($w_e$=0) and intermediate optimization ($w_e$=0.5). The obtained results were compared with those obtained at the same conditions by the same refrigeration system 100, equipped with traditional mechanical thermostat with traditional hysteresis band $\Delta=\pm 1°C$.

**(a) test in accordance with the UNI-ISO15502 norm**

With reference to the test in accordance with the UNI-ISO15502 norm and as regards the temperatures, references provided by the law in force ($T_{,ext}$ equal to [25, 32]°C and $T_{set}$ equal to -18°C) were considered. The tests were conducted with zero load within chamber 101 and lasted for 24 hours each. Also experiments with the traditional mechanical thermostat of the system were carried out with the same procedure, so as to be able to compare and evaluate the effectiveness of the developed control methodology.

The variation of the energy consumption $and_{el,g}$ and of the cycle frequency $N_{C,G}$ are the variables used to evaluate the performance of the refrigeration system.

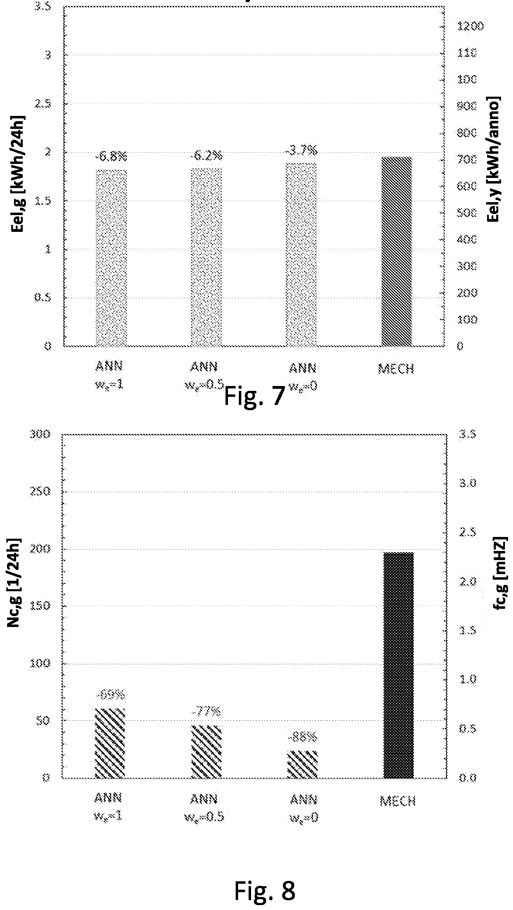

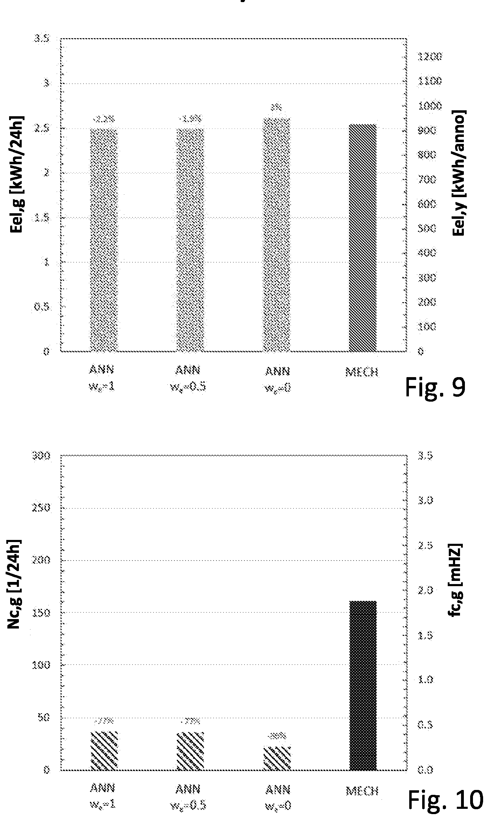

It was verified that the latter complies with the anticipated trend, and also provides for an advantage both in terms of consumption and in terms of stress of the compressor, in all three examined cases, as can be seen from Figures 7 and 8 which illustrate the energy consumption detected with traditional mechanical thermostat (MECH) and according to the method of the present invention under the conditions of $T_{A,ext}$= 25 °C, $T_{set}$= -18°C with $w_e$ varying. Similarly, Figures 9 and 10 illustrate the detected energy consumption with traditional mechanical thermostat (MECH) and according to the method of the present invention at $T_{A,ext}$=32°C, $T_{set}$= -18°C and with $w_e$ varying.

**(B) test where a load is present and opening of the door of the chamber of the refrigeration system occurs.**

The previously shown results, albeit obtained with reference to regulations in force, do not take account of some essential factors that affect the system behaviour. Among these, there is the variability of the external environment temperature during the course of the day. In addition, with reference to a domestic application, it is not possible to ignore the opening of the access door of the chamber of the refrigeration system, as this has a strong impact on the evolution of the internal temperature of the system, with consequent variation in the pattern of consumption. In conjunction with this phenomenon, unloading of material from the chamber of the refrigeration system, which chamber is presumably at the desired temperature state, and subsequent loading of other elements to be cooled, which are initially at a temperature of the external environment, could occur.

In order to evaluate, therefore, the effectiveness of the designed control method, one experimental test was conducted, for a time of 48h,aiming at reproducing the conditions of operation of the refrigeration system closer to reality, both using a refrigeration system according to the present invention and a refrigeration system with traditional mechanical thermostat. In particular, one profile for $T_{A,ext}$ was set, given by a sum of sine as a function of time, comprised between 24°C and 29°C. The test has also provided 4 openings of the door, lasting for 1 minute each, at certain moments in time, during which so-called "pick and place" were arranged of the, i.e. unloading and contemporary loading of a preset certain quantity of water. In practice, for the extraction of one bottle of iced water the introduction into the chamber to another bottle of water at ambient temperature occurred.

More in detail: at the first opening a single bottle was exchanged, at the second, two, at the third three, and at the fourth opening still two. It was also considered, as regards the optimization priority, a bi-hourly electricity pricing, and given the flexibility permitted by the invention, in the corresponding test, the weight given to the energy optimization priority of energy consumption $w_e$ was set variable, depending on the time slot and i.e.:

- pure energy optimisation logic ($w_e$=1), in the time slot with higher costs; and

- Intermediate logic ($w_e$=0.5) in the other.

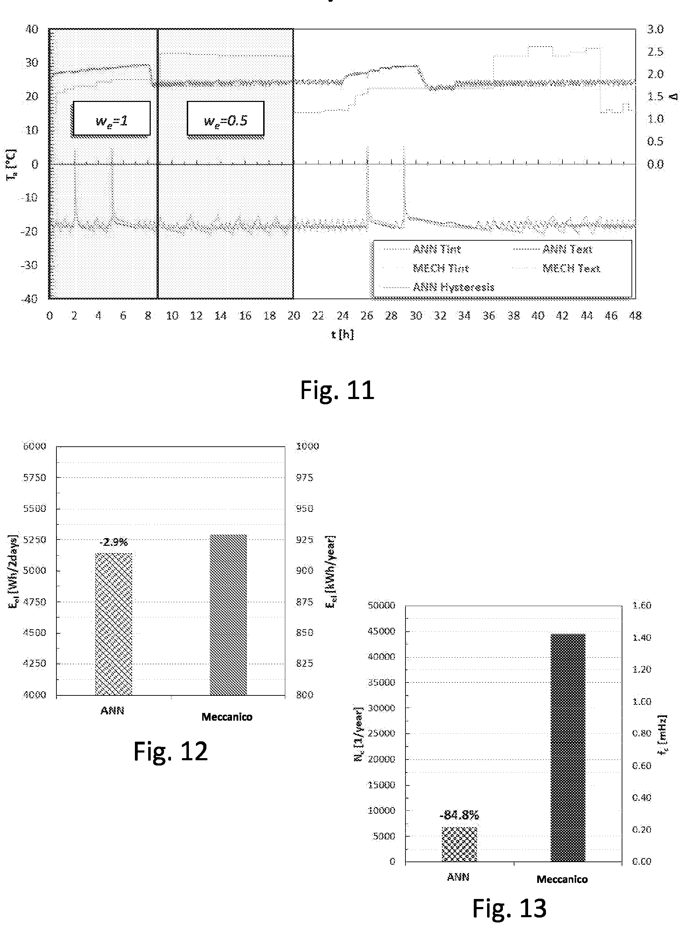

In this way it was decided to test a method of "smart" control, aimed at reducing the consumption of energy and preserving the components of the system, by reducing the stress thereof due to too high cycle frequencies. The detected temperature profiles (see Figure 11) show how the invention makes the air temperature of the environment inside the chamber oscillate in a totally different way with respect to the traditional mechanical thermostat, adapting itself to the variation of the external temperature conditions and the will of the user to change the logic of optimization.

The green highlighted area represents in fact the hourly band at higher costs, where the processor sets one energy optimization priority; the red one, instead, represents the low cost band, where the goal is to reduce the number of ignition cycles of the compressor. It is observed that the hysteresis band (solid green line) varies from a minimum of 1.0°C to a maximum of 2.6 °C. The greater jump of its value variation is mainly due to the transition from an optimization logic to the other, but it can still be noted (green area) how $\Delta_{opt}$ undergoes variations linked to changes in the air temperature of the external environment (solid red line). The behaviour of the temperature inside the chamber of the refrigeration system in the two tested cases is identical in relation to the opening of the door: this causes a sudden rise of the variable of interest (temperature) up to about 5° C. Once the door is closed, the system tends to bring the air inside to the desired conditions; the time necessary for the achievement of the objective is obviously linked to the optimum hysteresis.

In this case, the saving in terms of energy consumption (see Fig. 12) settles around a value of 2.9%. As regards the cycle frequency, instead, the advantage that is obtained by the use of the method according to the present invention is decidedly evident being around a reduction, in the number of cycle, equal to about 85% (Fig. 13).

In the foregoing the preferred embodiments were described and some modifications of the present invention were suggested, but it should be understood that those skilled in the art can make modifications and changes without departing from the relative scope of protection, as defined by the appended claims.

BIBLIOGRAPHY

[1] Mohajan H., 2011. Greenhouse gas emissions increase global warming. Published in: International Journal of Economic and Political Integration, Vol. 1, No. 2 (31. December 2011): pp. 21-34.

[2] International Institute of Refrigeration, I., 2015. The Role of Refrigeration in the Global Economy. Inf. Note Refrig. Technol. / 29.

[3] Calm, J.M., 2002. Emissions and environmental impacts from air-conditioning and refrigeration systems. Int. J. Refrig. 25, 293-305. doi:10.1016/S0140-7007(01)00067-6

[4] Makhnatch, P., Khodabandeh, R., 2014. The role of environmental metrics (GWP, TEWI, LCCP) in the selection of low GWP refrigerant. Energy Procedia 61, 2460-2463. doi: 10.1016/j.egypro.2014.12.023

[5] Davies, T.W., Caretta, O., 2004. A low carbon, low TEWI refrigeration system design. Appl. Therm. Eng. 24, 1119-1128. doi:10.1016/j.applthermaleng.2003.12.026

[6] Lee, H., Troch, S., Hwang, Y., Radermacher, R., 2016. Évaluation du LCCP de diverses options de cycle a compression de vapeur et de frigorigènes a faible GWP. Int. J. Refrig. 70, 128-137.

[7] Bolaji, B.O., Huan, Z., 2013. Ozone depletion and global warming: Case for the use of natural refrigerant - A review. Renew. Sustain. Energy Rev. 18, 49-54. doi:10.1016/j.rser.2012.10.008doi:10.1016/j.ijrefrig.2013.06.012

[8] Aprea, C., Greco, A., Maiorino, A., 2013. The substitution of R134a with R744: An exergetic analysis based on experimental data. Int. J. Refrig. 36, 2148-2159.

[9] Calm, J.M., 2006. Comparative efficiencies and implications for greenhouse gas emissions of chiller refrigerants. Int. J. Refrig. 29, 833-841. doi:10.1016/j.ijrefrig.2005.08.017

[10] Venkatarathnam, G., Murthy, S.S., 2012. Refrigerants for vapour compression refrigeration systems. Resonance 17, 139-162. doi:10.1007/s1204S-012-001S-x

[11] Horie, Y.A., 2004. Life Cycle Optimization of Household Refrigerator-Freezer Replacement, Center for Sustainable Systems.

[12] De Almeida, A., Fonseca, P., Schlomann, B., Feilberg, N., 2011. Characterization of the household electricity consumption in the EU, potential energy savings and specific policy recommendations. Energy Build. 43, 1884-1894. doi:10.1016/j.enbuild.2011.03.027

[13] Bansal, P., Vineyard, E., Abdelaziz, O., 2011. Advances in household appliances- A review. Appl. Therm. Eng. 31, 3748-3760.

[14] Belman-Flores, J.M., Barroso-Maldonado, J.M., Rodríguez-Muñoz, A.P., Camacho-Vázquez, G., 2015. Enhancements in domestic refrigeration, approaching a sustainable refrigerator - A review. Renew. Sustain. Energy Rev. 51, 955-968. doi:10.1016/j.rser.2015.07.003

[15] Radermacher, R., Kim, K., 1996. Domestic refrigerators : recent developments R6frig6rateurs domestiques : mises au point r6centes. Science (80-. ). 19.

[16] Kim, H.C., Keoleian, G.A., Horie, Y.A., 2006. Optimal household refrigerator replacement policy for life cycle energy, greenhouse gas emissions, and cost. Energy Policy 34, 2310-2323. doi: 10.1016/j.enpol.2005.04.004

[17] Usta, N., Ileri, A., 1999. Computerized economic optimization of refrigeration system design. Energy Convers. Manag. 40, 1089-1109. doi:10.1016/S0196-8904(99)00004-7

[18] Bansal, P., Vineyard, E., Abdelaziz, O., 2012. Status of not-in-kind refrigeration technologies for household space conditioning, water heating and food refrigeration. Int. J. Sustain. Built Environ. 1, 85-101. doi:10.1016/j.ijsbe.2012.07.003

[19] Qian, S., Nasuta, D., Rhoads, A., Wang, Y., Geng, Y., Hwang, Y., Radermacher, R., Takeuchi, I., 2016. Not-in-kind cooling technologies: A quantitative comparison of refrigerants and system performance. Int. J. Refrig. 62, 177-192. doi:10.1016/j.ijrefrig.2015.10.019

[20] Leva, A., Piroddi, L., Di Felice, M., Boer, A., Paganini, R., 2010. Adaptive relay-based control of household freezers with on-off actuators. Control Eng. Pract. 18, 94-102. doi:10.1016/j.conengprac.2009.09.008

[21] Kizilkan, O., 2011. Thermodynamic analysis of variable speed refrigeration system using artificial neural networks. Expert Syst. Appl. 38, 11685-11692. doi:10.1016/j.eswa.2011.03.052

[22] Marler, R.T., Arora, J.S., 2010. The weighted sum method for multi-objective optimization: New insights. Struct. Multidiscip. Optim. 41, 853-862. doi:10.1007/s00158-009-0460-7

[23] Byrd, R. H., M.E. Hribar, and J.N., 1997. An Interior Point Algorithm for Large Scale Nonlinear Programming. SIAM J. Opt. 9, 877-900. doi:10.1137/S1052623497325107

**Claims**

1. Adjustment method (1) for at least one refrigeration system (100), comprising at least one chamber (101) whose temperature is to be adjusted, said at least one chamber being thermodynamically connected to at least one refrigeration circuit (102) including at least one compressor (1021), wherein said at least one refrigeration circuit (102) comprises at least one fluid and is configured for subjecting said at least one fluid to at least one refrigeration cycle, so as to subtract heat energy from said at least one chamber (101) for obtaining at least one desired temperature ($T_{set}$) within a hysteresis band ($\Delta$), said adjustment method comprising the following operational steps:

   A. detecting at least one temperature value ($T_{ext}$) external with respect to said refrigeration system;
   B. detecting at least one temperature value inside said chamber (Tint);

   and being **characterized in that** it further comprises:

   C. detecting at least one parameter ($w_e$) associated to one energy optimization priority for said at least one refrigeration system (100);
   D. determining, by using one main artificial neural network (10), at least one optimum offset value ($\Delta_{opt}$) with respect to said desired temperature ($T_{set}$), as a function of said at least one value of said external temperature ($T_{ext}$) and said at least one value of said temperature (Tint) inside said chamber (101), and said parameter ($w_e$) associated to said energy optimization priority; and
   E. controlling the activation-deactivation of said at least one compressor (1201) based on said at least an offset value ($\Delta_{opt}$) thereby determined, and repeating steps A to D until the onset of one predefined stop condition.

2. Method (1) according to claim 1 wherein said step D is conditional on the determination of said main artificial neural network (10) through the following operational steps:

   I. determining at least one mapping of the performance of said at least one refrigeration system (100) to be adjusted, within its operating range, by means of a secondary artificial neural network (10');
   II. minimizing, by using one constrained optimisation algorithm, one cost function (g) defined on the basis of said at least one mapping thereby determined, and obtaining in output said at least one optimum offset value ($\Delta_{opt}$); and

III. training said main artificial neural network (10), based on said at least one optimum offset value ($\Delta_{opt}$) thereby determined, said at least one temperature value ($T_{ext}$) external with respect to said refrigeration system, said at least one temperature value inside said chamber (Tint) and said at least one parameter ($w_e$) associated to said energy optimization priority thereby detected.

**3.** Method (1) according to claim 2, wherein said at least one secondary artificial neural network (10') is an artificial neural network of the feed-forward type, configured for outputting the duty cycle ($\delta$) of said at least one compressor (1021), the electric energy consumption ($E_{el,g}$) and the number of cycles ($N_{c,g}$) per day of the same, based on said desired temperature ($T_{set}$), the temperature of the external environment ($T_{,ext}$) and said hysteresis band ($\Delta$).

**4.** Method (1) according to claim 2 or 3, wherein said at least one secondary artificial neural network (10') comprises at least three layers, including one hidden layer, wherein the activation functions of the hidden layer are of the hyperbolic tangent type and those in the output layer are of the linear type.

**5.** Method (1) according to any one of claims 2 to 4, wherein said at least one secondary artificial neural network (10') is trained off-line through the implementation of one mapping, resulting from a trial carried out by performing a plurality of laboratory tests conducted by setting different temperature values of the air of the external environment $T_{a,ext}$ and the set-point $T_{set}$ that are consistent with the operating conditions of said at least one refrigeration system (100) to be adjusted.

**6.** Method (1) according to claim 2, wherein said cost function (g) is given by:

$$g = N_{c,g} * w_c * c_{cycle} + E_{el,g} * w_e * c_{ee}$$

and the constraints to which it is subjected are indicated by the following equations:

$$T_{set} + \Delta \leq T_{max,lim}$$
$$-T_{set} + \Delta \leq -T_{min,lim}$$
$$T_{set} = T_{desired}$$
$$T_{a,ext} = T_{measured}$$

wherein:

- $T_{max,lim}$ is the maximum allowable temperature inside said chamber (101) and depends on the type of product stored therein;
- $T_{max,lim}$ is the minimum allowable temperature inside said chamber (101) and depends on said refrigeration system (100);
- $T_{desired}$ is a desired temperature within said chamber;
- $T_{measured}$ is the temperature measured externally to said refrigeration system (100) and both $T_{desired}$ and $T_{measured}$ derive from said mapping determined in said step (I);

from which the constrained optimisation problem is derived:

$$\min g = N_{c,g} * w_c * c_{cycle} + E_{el,g} * w_e * c_{ee}$$

$$-T_{set} + \Delta \leq -T_{min,lim}$$

$$T_{set} + \Delta \leq T_{max,lim}$$

$$T_{set} = T_{desired}$$

$$T_{a,ext} = T_{measured}$$

$$w_e = w_{e,desired}$$

$$w_c = 1 - w_e$$

$$c_{cycle} = c_{i,ref}/N_{c,ref}$$

$$c_{ee} = c_{e,u}$$

$$T_{a,ext,min} \leq T_{a,ext} \leq T_{a,ext,max}$$

$$T_{min,lim} \leq T_{set} \leq T_{max,lim}$$

$$\Delta_{min} \leq \Delta \leq \Delta_{max}$$

wherein, in addition:

- $C_{i,ref}$ is the market value of said refrigeration system (100);
- $N_{c,ref}$ is the number of expected working cycles;
- $C_{e,u}$ is the average cost of electric kWh for the country wherein said refrigeration system is located
- $w_e$ and $w_c$ are bound together through value $w_{e,measured}$, representing a value comprised between 0 and 1, whereby with values of $w_{e,measured}$ close to 0, one optimization logic is identified aiming at extending the useful life of said refrigeration system (100), while for values close to 1, one optimization logic is identified aiming at reducing energy consumption.

7. Method (1) according to any one of the preceding claims, wherein said main artificial neural network (10) is an artificial neural network of the feed-forward type, comprising at least 3 layers, optionally three, one of which is hidden, and the activation functions used in the hidden layer are of the hyperbolic tangent type, while in the output layer they are of the linear type.

8. Method (1) according to any one of the preceding claims, wherein said step E comprises:

- determining at least one maximum temperature value $T_{turnon}$, and at least one minimum temperature value $T_{turnoff}$ based on said at least one optimum offset value ($\Delta_{opt}$) determined at said step D, wherein:

$$T_{turnon} = T_{set} + \Delta_{opt}$$

$$T_{turnoff} = T_{set} - \Delta_{opt}$$

- comparing said at least one value of the temperature inside said chamber (Tint) with said at least one maximum temperature value $T_{turnon}$ and said at least one minimum temperature value $T_{turnoff}$, and
- deactivating the said at least one compressor (1021), if said internal temperature (Tint) is less than said minimum temperature value $T_{turnoff}$ or activating said at least one compressor (1021), if said internal temperature (Tint) is greater than said maximum temperature value $T_{turnon}$.

9. Adjustment group (200) for at least one refrigeration system (100), comprising at least one chamber (101) whose temperature is to be adjusted, said at least one chamber (101) being thermodynamically connected to at least one refrigeration circuit (102) including at least one compressor (1021), wherein said at least one refrigeration circuit (102) comprises at least one fluid and is configured for subjecting said at least one fluid to at least one refrigeration cycle, so as to subtract heat energy from said at least one chamber (101) for achieving at least one desired temperature ($T_{set}$), said adjustment group comprising:

- at least one first sensor (201) configured to detect at least one temperature value ($T_{ext}$) external with respect to said refrigeration system;
- at least one second sensor (202) configured to detect at least one temperature value (Tint) inside said chamber;

and being **characterized in that** it further comprises:

- at least one input/output device (203) configured to detect the selection of at least one energy optimization function ($w_e$) for said at least one refrigeration system (100);
- at least one processor (204), comprising at least one artificial neural network (10), operatively connected to said at least one first sensor (201), to said at least one second sensor (202) and said at least one input/output device (203), and configured therewith for implementing said adjustment method according to any one of the preceding claims.

**Patentansprüche**

1. Einstellverfahren (1) für mindestens ein Kühlsystem (100), das mindestens eine Kammer (101) umfasst, deren Temperatur eingestellt werden soll, wobei die mindestens eine Kammer thermodynamisch mit mindestens einem Kühlkreislauf (102) verbunden ist, der mindestens einen Kompressor (1021) umfasst, wobei der mindestens eine Kühlkreislauf (102) mindestens ein Fluid umfasst und so konfiguriert ist, dass er das mindestens eine Fluid mindestens einem Kühlzyklus unterwirft, um der mindestens einen Kammer (101) Wärmeenergie zu entziehen, um mindestens eine gewünschte Temperatur ($T_{set}$) innerhalb eines Hysteresebandes ($\Delta$) zu erhalten, wobei das Einstellverfahren die folgenden Arbeitsschritte umfasst:

   A. Erfassen mindestens eines Temperaturwerts ($T_{ext}$) außerhalb des Kühlsystems;
   B. Erfassen mindestens eines Temperaturwerts im Inneren der Kammer (Tint);

   und **dadurch gekennzeichnet ist, dass** es ferner umfasst:

   C. Erfassen mindestens eines Parameters ($w_e$), der mit einer Energieoptimierungspriorität für das mindestens eine Kühlsystem (100) verbunden ist;
   D. Bestimmen, unter Verwendung eines künstlichen neuronalen Hauptnetzes (10), mindestens eines optimalen Offset-Wertes ($\Delta_{opt}$) in Bezug auf die gewünschte Temperatur ($T_{set}$) als Funktion des mindestens einen Wertes der Außentemperatur ($T_{ext}$) und des mindestens einen Wertes der Temperatur (Tint) innerhalb der Kammer (101) und des Parameters ($w_e$), der mit der Energieoptimierungspriorität verbunden ist; und
   E. Steuern der Aktivierung/Deaktivierung des mindestens einen Verdichters (1201) auf der Grundlage des dadurch bestimmten mindestens einen Offset-Wertes ($\Delta_{opt}$) und Wiederholen der Schritte A bis D bis zum Eintreten einer vordefinierten Stopp-Bedingung.

2. Verfahren (1) nach Anspruch 1, wobei der Schritt D von der Bestimmung des künstlichen neuronalen Hauptnetzes (10) durch die folgenden Arbeitsschritte abhängig ist:

   I. Bestimmung mindestens einer Abbildung der Leistung des mindestens einen einzustellenden Kühlsystems (100) innerhalb seines Betriebsbereichs mit Hilfe eines sekundären künstlichen neuronalen Netzes (10');
   II. Minimieren einer Kostenfunktion (g), die auf der Grundlage der mindestens einen so bestimmten Abbildung definiert ist, unter Verwendung eines eingeschränkten Optimierungsalgorithmus, und Erhalten des mindestens einen optimalen Offset-Wertes ($\Delta_{opt}$) als Ausgabe; und
   III. Trainieren des künstlichen neuronalen Hauptnetzes (10) auf der Grundlage des so bestimmten mindestens einen optimalen Offset-Wertes ($\Delta_{opt}$), des mindestens einen Temperaturwertes ($T_{ext}$) außerhalb des Kühlsystems, des mindestens einen Temperaturwertes innerhalb der Kammer ($T_{int}$) und des mindestens einen Parameters ($w_e$), der mit der so ermittelten Energieoptimierungspriorität verbunden ist.

3. Verfahren (1) nach Anspruch 2, bei dem das mindestens eine sekundäre künstliche neuronale Netz (10') ein künstliches neuronales Netz vom Feed-Forward-Typ ist, das so konfiguriert ist, dass es den Arbeitszyklus ($\delta$) des mindestens einen Kompressors (1021), den elektrischen Energieverbrauch ($E_{el,g}$) und die Anzahl der Zyklen ($N_{c,g}$) pro Tag desselben auf der Grundlage der gewünschten Temperatur ($T_{set}$), der Temperatur der äußeren Umgebung ($T_{,ext}$) und des Hysteresebandes ($\Delta$) ausgibt.

4. Verfahren (1) nach Anspruch 2 oder 3, wobei das mindestens eine sekundäre künstliche neuronale Netz (10') mindestens drei Schichten umfasst, einschließlich einer versteckten Schicht, wobei die Aktivierungsfunktionen der versteckten Schicht vom hyperbolischen Tangenten-Typ sind und die in der Ausgangsschicht vom linearen Typ sind.

5. Verfahren (1) nach einem der Ansprüche 2 bis 4, bei dem das mindestens eine sekundäre künstliche neuronale Netz (10') offline durch die Implementierung eines Mappings trainiert wird, das aus einem Versuch resultiert, der durch die Durchführung einer Vielzahl von Labortests durchgeführt wird, die durch die Einstellung verschiedener-Temperaturwerte der Luft der äußeren Umgebung $T_{a,ext}$ und des Sollwerts $T_{set}$ durchgeführt werden, die mit den Betriebsbedingungen des mindestens einen einzustellenden Kühlsystems (100) konsistent sind.

6. Verfahren (1) nach Anspruch 2, wobei die Kostenfunktion (g) gegeben ist durch:

$$g = N_{c,g} * w_c * c_{cycle} + E_{el,g} * w_e * c_{ee}$$

und die Zwangsbedingungen, denen es unterliegt, sind in den folgenden Gleichungen angegeben:

$$T_{set} + \Delta \leq T_{max,lim}$$

$$-T_{set} + \Delta \leq -T_{min,lim}$$

$$T_{set} = T_{desired}$$

$$T_{a,ext} = T_{measured}$$

wobei:

- $T_{max,lim}$ ist die maximal zulässige Temperatur im Inneren der Kammer (101) und hängt von der Art des darin gelagerten Produkts ab;
- $T_{max,lim}$ ist die minimal zulässige Temperatur im Inneren der Kammer (101) und hängt von der Kühlanlage (100) ab;
- $T_{desired}$ ist eine gewünschte Temperatur innerhalb der Kammer;
- $T_{measured}$ ist die außerhalb des Kühlsystems (100) gemessene Temperatur, und sowohl $T_{desired}$ als auch $T_{measured}$ ergeben sich aus der in Schritt (I) bestimmten Abbildung;

aus dem das eingeschränkte Optimierungsproblem abgeleitet wird:

$$\min g = N_{c,g} * w_c * c_{cycle} + E_{el,g} * w_e * c_{ee}$$

$$-T_{set} + \Delta \leq -T_{min,lim}$$

$$T_{set} + \Delta \leq T_{max,lim}$$

$$T_{set} = T_{desired}$$

$$T_{a,ext} = T_{measured}$$

$$w_e = w_{e,desired}$$

$$w_c = 1 - w_e$$

$$c_{cycle} = c_{i,ref}/N_{c,ref}$$

$$c_{ee} = c_{e,u}$$

$$T_{a,ext,min} \leq T_{a,ext} \leq T_{a,ext,max}$$

$$T_{min,lim} \leq T_{set} \leq T_{max,lim}$$

$$\Delta_{min} \leq \Delta \leq \Delta_{max}$$

wobei zusätzlich

- $C_{i,ref}$ ist der Marktwert der Kühlanlage (100);
- $N_{c,ref}$ ist die Anzahl der erwarteten Arbeitszyklen;
- $C_{e,u}$ ist der durchschnittliche Preis für eine elektrische kWh in dem Land, in dem sich die Kühlanlage befindet
- $w_e$ und $w_c$ sind durch den Wert $w_{e,measured}$ miteinander verbunden, der einen Wert zwischen 0 und 1 darstellt, wobei bei Werten von $w_{e,measured}$ nahe 0 eine Optimierungslogik identifiziert wird, die darauf abzielt, die Nutzungsdauer des Kühlsystems (100) zu verlängern, während bei Werten nahe 1 eine Optimierungslogik identifiziert wird, die darauf abzielt, den Energieverbrauch zu reduzieren.

7. Verfahren (1) nach einem der vorhergehenden Ansprüche, wobei das künstliche neuronale Hauptnetz (10) ein künstliches neuronales Netz vom Vorwärtskopplungstyp ist, das mindestens 3 Schichten, optional drei, umfasst, von denen eine versteckt ist, und die in der versteckten Schicht verwendeten Aktivierungsfunktionen vom hyperbolischen Tangententyp sind, während sie in der Ausgangsschicht vom linearen Typ sind.

8. Verfahren (1) nach einem der vorhergehenden Ansprüche, wobei der Schritt E umfasst:

- Bestimmen mindestens eines maximalen Temperaturwerts $T_{turnon}$ und mindestens eines minimalen Temperaturwerts $T_{turnoff}$ auf der Grundlage des in Schritt D bestimmten mindestens einen optimalen Offsetwerts ($\Delta_{opt}$), wobei:

$$T_{turnon} = T_{set} + \Delta_{opt}$$

$$T_{turnoff} = T_{set} - \Delta_{opt}$$

- Vergleichen des mindestens einen Wertes der Temperatur im Inneren der Kammer (Tint) mit dem mindestens einen maximalen Temperaturwert $T_{turnon}$ und dem mindestens einen minimalen Temperaturwert $T_{turnoff}$, und
- Deaktivieren des mindestens einen Kompressors (1021), wenn die Innentemperatur (Tint) kleiner als der minimale Temperaturwert $T_{turnoff}$ ist, oder Aktivieren des mindestens einen Kompressors (1021), wenn die Innentemperatur (Tint) größer als der maximale Temperaturwert $T_{turnon}$ ist.

9. Einstellgruppe (200) für mindestens ein Kühlsystem (100), umfassend mindestens eine Kammer (101), deren Temperatur einzustellen ist, wobei die mindestens eine Kammer (101) thermodynamisch mit mindestens einem Kühlkreislauf (102) verbunden ist, der mindestens einen Kompressor (1021) enthält, wobei der mindestens eine Kühlkreislauf (102) mindestens ein Fluid umfasst und so konfiguriert ist, dass er das mindestens eine Fluid mindestens einem Kühlzyklus unterzieht, um der mindestens einen Kammer (101) Wärmeenergie zu entziehen, um mindestens eine gewünschte Temperatur ($T_{set}$) zu erreichen, wobei die Einstellgruppe umfasst:

- mindestens einen ersten Sensor (201), der so konfiguriert ist, dass er mindestens einen Temperaturwert ($T_{ext}$) außerhalb des Kühlsystems erfasst;
- mindestens einen zweiten Sensor (202), der so konfiguriert ist, dass er mindestens einen Temperaturwert (Tint) im Inneren der Kammer erfasst;

und **dadurch gekennzeichnet ist, dass** es ferner umfasst:

- mindestens eine Eingabe-/Ausgabevorrichtung (203), die so konfiguriert ist, dass sie die Auswahl von mindestens einer Energieoptimierungsfunktion ($w_e$) für das mindestens eine Kühlsystem (100) erfasst;
- mindestens einen Prozessor (204), der mindestens ein künstliches neuronales Netz (10) umfasst, das operativ mit dem mindestens einen ersten Sensor (201), dem mindestens einen zweiten Sensor (202) und der mindestens einen Eingabe-/Ausgabevorrichtung (203) verbunden ist und damit konfiguriert ist, um das Einstellverfahren nach einem der vorhergehenden Ansprüche durchzuführen.

## Revendications

**1.** Procédé de réglage (1) pour au moins un système de réfrigération (100), comprenant au moins une chambre (101) dont la température est à régler, ladite au moins une chambre étant reliée thermodynamiquement à au moins un circuit de réfrigération (102) incluant au moins un compresseur (1021), où ledit au moins un circuit de réfrigération (102) comprend au moins un fluide et est configuré pour soumettre ledit au moins un fluide à au moins un cycle de réfrigération, de manière à soustraire de l'énergie thermique de ladite au moins une chambre (101) pour obtenir au moins une température désirée ($T_{set}$) dans une bande d'hystérésis ($\Delta$), ledit procédé de réglage comprenant les étapes opérationnelles suivantes :

A. détecter au moins une valeur de température ($T_{ext}$) extérieure par rapport audit système de réfrigération ;
B. détecter au moins une valeur de température à l'intérieur de ladite chambre (Tint) ;

et étant **caractérisé en ce qu'**il comprend en outre :

C. détecter au moins un paramètre ($w_e$) associé à une priorité d'optimisation énergétique pour ledit au moins un système de réfrigération (100) ;
D. déterminer, en utilisant un réseau neuronal artificiel principal (10), au moins une valeur optimale de décalage ($\Delta_{opt}$) par rapport à ladite température désirée ($T_{set}$), en fonction de ladite au moins une valeur de ladite température extérieure ($T_{ext}$) et de ladite au moins une valeur de ladite température (Tint) à l'intérieur de ladite chambre (101), et dudit paramètre ($w_e$) associé à ladite priorité d'optimisation énergétique ; et
E. commander l'activation-désactivation dudit au moins un compresseur (1201) en fonction de ladite au moins une valeur de décalage ($\Delta_{opt}$) ainsi déterminée, et répéter les étapes A à D jusqu'à l'apparition d'une condition d'arrêt prédéfinie.

**2.** Procédé (1) selon la revendication 1 où ladite étape D est conditionnée à la détermination dudit réseau neuronal artificiel principal (10) via les étapes opérationnelles suivantes :

I. déterminer au moins une cartographie des performances dudit au moins un système de réfrigération (100) à régler, dans sa plage de fonctionnement, au moyen d'un réseau neuronal artificiel secondaire (10') ;
II. minimiser, en utilisant un algorithme d'optimisation sous contraintes, une fonction de coût (g) définie à partir de ladite au moins une cartographie ainsi déterminée, et obtenir en sortie ladite au moins une valeur optimale de décalage ($\Delta_{opt}$) ; et
III. former ledit réseau neuronal artificiel principal (10), sur la base de ladite au moins une valeur optimale de décalage ($\Delta_{opt}$) ainsi déterminée, de ladite au moins une valeur de température ($T_{ext}$) extérieure par rapport audit système de réfrigération, de ladite au moins une valeur de température à l'intérieur de ladite chambre (Tint) et dudit au moins un paramètre ($w_e$) associé à ladite priorité d'optimisation énergétique ainsi détecté.

3. Procédé (1) selon la revendication 2, où ledit au moins un réseau neuronal artificiel secondaire (10') est un réseau neuronal artificiel de type à propagation avant, configuré pour délivrer en sortie le rapport cyclique ($\delta$) dudit au moins un compresseur (1021), de la consommation d'énergie électrique ($E_{el,g}$) et du nombre de cycles ($N_{c,g}$) par jour de celui-ci, sur la base de ladite température désirée ($T_{set}$), de la température de l'environnement extérieur ($T_{,ext}$) et de ladite bande d'hystérésis ($\Delta$).

4. Procédé (1) selon la revendication 2 ou 3, où ledit au moins un réseau neuronal artificiel secondaire (10') comprend au moins trois couches, dont une couche cachée, où les fonctions d'activation dans la couche cachée sont de type tangente hyperbolique et ceux dans la couche de sortie sont de type linéaire.

5. Procédé (1) selon l'une quelconque des revendications 2 à 4, où ledit au moins un réseau neuronal artificiel secondaires (10') est entraîné hors ligne par la mise en œuvre d'une cartographie, résultant d'un essai exécuté en effectuant une pluralité de tests en laboratoire réalisés en fixant différentes valeurs de température de l'air du milieu extérieur $T_{a,ext}$ et de la consigne $T_{set}$ qui sont cohérentes avec les conditions de fonctionnement dudit au moins un système de réfrigération (100) à régler.

6. Méthode (1) selon la revendication 2, dans laquelle ladite fonction de coût (g) est donnée par :

$$g = N_{c,g} * w_c * c_{cycle} + E_{el,g} * w_e * c_{ee}$$

et les contraintes auxquelles elle est soumise sont indiquées par les équations suivantes :

$$T_{set} + \Delta \leq T_{max,lim}$$

$$-T_{set} + \Delta \leq -T_{min,lim}$$

$$T_{set} = T_{desired}$$

$$T_{a,ext} = T_{measured}$$

où :

$T_{max,lim}$ est la température maximale admissible à l'intérieur de ladite chambre (101) et dépend du type de produit qui y est stocké ;
$T_{max,lim}$ est la température minimale admissible à l'intérieur de ladite chambre (101) et dépend dudit système de réfrigération (100) ;
$T_{desired}$ est une température désirée à l'intérieur de ladite chambre ;
$T_{measured}$ est la température mesurée à l'extérieur dudit système de réfrigération (100) et $T_{desired}$ et $T_{measured}$ dérivent toutes deux de ladite cartographie déterminée à ladite étape (I) ;

à partir de quoi est dérivé le problème d'optimisation sous contraintes :

$$\min g = N_{c,g} * w_c * c_{cycle} + E_{el,g} * w_e * c_{ee}$$

$$-T_{set} + \Delta \leq -T_{min,lim}$$

$$T_{set} + \Delta \leq T_{max,lim}$$

$$T_{set} = T_{desired}$$

$$T_{a,ext} = T_{measured}$$

$$W_e = W_{e,desired}$$

$$W_c = 1 - W_e$$

$$C_{cycle} = C_{i,ref} / N_{c,ref}$$

$$C_{ee} = C_{e,u}$$

$$T_{a,ext,min} \leq T_{a,ext} \leq T_{a,ext,max}$$

$$T_{min,lim} \leq T_{set} \leq T_{max,lim}$$

$$\Delta_{min} \leq \Delta \leq \Delta_{max}$$

où, de surcroît :

- $C_{i,ref}$ est la valeur marchande dudit système de réfrigération (100) ;
- $N_{c,ref}$ est le nombre de cycles de travail attendus ;
- $C_{e,u}$ est le coût moyen du kWh électrique pour le pays où ledit système de réfrigération est situé
- $w_e$ et $w_c$ sont liés par la valeur $w_{e,mesured}$, représentant une valeur comprise entre 0 et 1, de sorte qu'avec des valeurs de $w_{e,mesured}$ proches de 0, une logique d'optimisation est identifiée visant à prolonger la durée de vie dudit système de réfrigération (100), tandis que pour des valeurs proches de 1, une logique d'optimisation est identifiée visant à réduire la consommation d'énergie.

7. Procédé (1) selon l'une quelconque des revendications précédentes, où ledit réseau neuronal artificiel principal (10) est un réseau neuronal artificiel de type à propagation avant, comprenant au moins 3 couches, optionnellement trois, dont une est cachée, et les fonctions d'activation utilisées dans la couche cachée sont de type tangente hyperbolique, tandis que dans la couche de sortie elles sont de type linéaire.

8. Procédé (1) selon l'une quelconque des revendications précédentes, où ladite étape E comprend :

- déterminer au moins une valeur de température maximale $T_{turnon}$, et au moins une valeur de température minimale $T_{turnoff}$ sur la base de ladite au moins une valeur de décalage optimale ($\Delta_{opt}$) déterminée à ladite étape D, où :

$$T_{turnon} = T_{set} + \Delta_{opt}$$

$$T_{turnoff} = T_{set} - \Delta_{opt}$$

- comparer ladite au moins une valeur de la température à l'intérieur de ladite chambre (Tint) avec ladite au moins une valeur de température maximale $T_{turnon}$ et ladite au moins une valeur de température minimale $T_{turnoff}$, et
- désactiver ledit au moins un compresseur (1021), si ladite température intérieure (Tint) est inférieure à ladite valeur de température minimale $T_{turnoff}$ ou activer ledit au moins un compresseur (1021), si ladite température intérieure (Tint) est supérieure à ladite valeur de température maximale $T_{turnon}$.

9. Groupe de réglage (200) pour au moins un système de réfrigération (100), comprenant au moins une chambre (101) dont la température est à régler, ladite au moins une chambre (101) étant reliée thermodynamiquement à au moins un circuit de réfrigération (102) incluant au moins un compresseur (1021), où ledit au moins un circuit de réfrigération (102) comprend au moins un fluide et est configuré pour soumettre ledit au moins un fluide à au moins un cycle de réfrigération, de manière à soustraire de l'énergie thermique à ladite au moins une chambre (101) pour atteindre au moins une température désirée ($T_{set}$), ledit groupe de réglage comprenant :

au moins un premier capteur (201) configuré pour détecter au moins une valeur de température ($T_{ext}$) extérieure par rapport audit système de réfrigération ;
au moins un deuxième capteur (202) configuré pour détecter au moins une valeur de température (Tint) à l'intérieur de ladite chambre ;

et étant **caractérisé en ce qu'**il comprend en outre :

a u moins un dispositif d'entrée/sortie (203) configuré pour détecter la sélection d'au moins une fonction d'optimisation énergétique ($w_e$) pour ledit au moins un système de réfrigération (100) ;
a u moins un processeur (204), comprenant au moins un réseau neuronal artificiel (10), fonctionnellement connecté audit au moins un premier capteur (201), audit au moins un second capteur (202) et audit au moins un dispositif d'entrée/sortie (203), et configuré avec celui-ci pour mettre en œuvre ledit procédé de réglage selon l'une quelconque des revendications précédentes.

(PRIOR ART)

Fig. 1

Fig. 2

Fig. 3

Fig. 4

Fig. 5

Fig. 6

Fig. 5a

Fig. 6a

Fig. 7

Fig. 8

## Fig. 9

## Fig. 10

Fig. 11

Fig. 12

Fig. 13

**EP 3 928 041 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5231848 A
- CN 104296493 A

- DE 102015211961 A1

### Non-patent literature cited in the description

- **MOHAJAN H.** Greenhouse gas emissions increase global warming. *International Journal of Economic and Political Integration,* 31 December 2011, vol. 1 (2), 21-34
- **INTERNATIONAL INSTITUTE OF REFRIGERATION, I.** The Role of Refrigeration in the Global Economy. *Inf. Note Refrig. Technol.,* 2015, 29
- **CALM, J.M.** Emissions and environmental impacts from air-conditioning and refrigeration systems. *Int. J. Refrig.,* 2002, vol. 25, 293-305
- **MAKHNATCH, P. ; KHODABANDEH, R.** The role of environmental metrics (GWP, TEWI, LCCP) in the selection of low GWP refrigerant. *Energy Procedia,* 2014, vol. 61, 2460-2463
- **DAVIES, T.W. ; CARETTA, O.** A low carbon, low TEWI refrigeration system design. *Appl. Therm. Eng.,* 2004, vol. 24, 1119-1128
- **LEE, H. ; TROCH, S. ; HWANG, Y. ; RADERMACHER, R.** Évaluation du LCCP de diverses options de cycle a compression de vapeur et de frigorigènes a faible GWP. *Int. J. Refrig.,* 2016, vol. 70, 128-137
- **BOLAJI, B.O. ; HUAN, Z.** Ozone depletion and global warming: Case for the use of natural refrigerant - A review. *Renew. Sustain. Energy Rev.,* 2013, vol. 18, 49-54
- **APREA, C. ; GRECO, A. ; MAIORINO, A.** The substitution of R134a with R744: An exergetic analysis based on experimental data. *Int. J. Refrig.,* 2013, vol. 36, 2148-2159
- **CALM, J.M.** Comparative efficiencies and implications for greenhouse gas emissions of chiller refrigerants. *Int. J. Refrig.,* 2006, vol. 29, 833-841
- **VENKATARATHNAM, G. ; MURTHY, S.S.** Refrigerants for vapour compression refrigeration systems. *Resonance,* 2012, vol. 17, 139-162
- **HORIE, Y.A.** Life Cycle Optimization of Household Refrigerator-Freezer Replacement. *Center for Sustainable Systems,* 2004

- **DE ALMEIDA, A. ; FONSECA, P. ; SCHLOMANN, B. ; FEILBERG, N.** Characterization of the household electricity consumption in the EU, potential energy savings and specific policy recommendations. *Energy Build.,* 2011, vol. 43, 1884-1894
- **BANSAL, P. ; VINEYARD, E. ; ABDELAZIZ, O.** Advances in household appliances- A review. *Appl. Therm. Eng.,* 2011, vol. 31, 3748-3760
- **BELMAN-FLORES, J.M. ; BARROSO-MALDONADO, J.M. ; RODRÍGUEZ-MUÑOZ, A.P. ; CAMACHO-VÁZQUEZ, G.** Enhancements in domestic refrigeration, approaching a sustainable refrigerator - A review. *Renew. Sustain. Energy Rev.,* 2015, vol. 51, 955-968
- **RADERMACHER, R. ; KIM, K.** Domestic refrigerators : recent developments R6frig6rateurs domestiques : mises au point r6centes. *Science,* 1996, vol. 80, 19
- **KIM, H.C. ; KEOLEIAN, G.A. ; HORIE, Y.A.** Optimal household refrigerator replacement policy for life cycle energy, greenhouse gas emissions, and cost. *Energy Policy,* 2006, vol. 34, 2310-2323
- **USTA, N. ; ILERI, A.** Computerized economic optimization of refrigeration system design. *Energy Convers. Manag.,* 1999, vol. 40, 1089-1109
- **BANSAL, P. ; VINEYARD, E. ; ABDELAZIZ, O.** Status of not-in-kind refrigeration technologies for household space conditioning, water heating and food refrigeration. *Int. J. Sustain. Built Environ.,* 2012, vol. 1, 85-101
- **QIAN, S. ; NASUTA, D. ; RHOADS, A. ; WANG, Y. ; GENG, Y. ; HWANG, Y. ; RADERMACHER, R. ; TAKEUCHI, I.** Not-in-kind cooling technologies: A quantitative comparison of refrigerants and system performance. *Int. J. Refrig.,* 2016, vol. 62, 177-192
- **LEVA, A. ; PIRODDI, L. ; DI FELICE, M. ; BOER, A. ; PAGANINI, R.** Adaptive relay-based control of household freezers with on-off actuators. *Control Eng. Pract.,* 2010, vol. 18, 94-102

33

- **KIZILKAN, O.** Thermodynamic analysis of variable speed refrigeration system using artificial neural networks. *Expert Syst. Appl.,* 2011, vol. 38, 11685-11692

- **MARLER, R.T. ; ARORA, J.S.** The weighted sum method for multi-objective optimization: New insights. *Struct. Multidiscip. Optim.,* 2010, vol. 41, 853-862
- **BYRD, R. H. ; M.E. HRIBAR ; J.N.** An Interior Point Algorithm for Large Scale Nonlinear Programming. *SIAM J. Opt.,* 1997, vol. 9, 877-900